# EUROPEAN PATENT APPLICATION

(11) **EP 2 008 525 A1**
(43) Date of publication of application: **31.12.2008**
(21) Application number: 07737072.4
(22) Date of filing: 16.04.2007
(51) Int. Cl.: A23F 3/16

(54) **PROCESS FOR PRODUCING PURIFIED GREEN TEA EXTRACT**

(30) Priority: 17.04.2006 JP 2006113437
(71) Applicant: Kao Corporation, Chuo-ku Tokyo 103-8210 (JP)
(72) Inventor: ABE, Tetsuya, Kamisu-shi Ibaraki 314-0103 (JP); UEOKA, Hideaki, Kamisu-shi Ibaraki 314-0103 (JP); SHIBATA, Keiji, Kamisu-shi Ibaraki 314-0103 (JP)
(74) Representative: HOFFMANN EITLE
(86) International application number: PCT/JP2007/000415
(87) International publication number: WO 2007/122818

(57) **Abstract**

A process for producing a purified green tea extract including mixing a green tea extract treated with an enzyme having a tannase activity in a mixed solution containing an organic solvent and water at a mass ratio from 60/40 to 90/10 and separating a precipitate thus formed.

The process is for producing a purified green tea extract, from a green tea extract, containing non-polymer catechins in a high concentration of, which can improve the taste by reducing bitterness/astringency and miscellaneous tastes caused by dietary fiber derived from green tea, provide a reduced protein content, and make it easy to drink.

## Description

### [Field of the Invention]

The present invention relates to a process for producing, from a green tea extract, a purified green tea extract containing non-polymer catechins in high concentration, which can improve the taste of the purified green tea extract by reducing the bitterness/astringency of green tea and miscellaneous tastes caused by the dietary fiber of green tea; provide a reduced protein content; and make it easy to drink.

### [Background of the Invention]

Catechins are known to have a cholesterol-suppressing effect and an α-amylase activity inhibitory effect (Patent Documents 1 and 2). In order for such physiological effects to materialize, it is necessary that an adult drink four to five cups of tea a day. So there has been a strong demand for the development of a technology making it possible to for a high concentration of catechins to be incorporated in a beverages so that catechins can be digested in a large amount.

Among such technologies is a method designed to incorporate molten catechins in a beverages by using a concentrate of a green tea extract (Patent Document 3). However, some of the beverages containing catechins in high concentration, such as sport drinks and black tea beverages with high concentrate catechins, are known to bring in an enormous damage to their commercial value due to the residual bitterness/astringency and miscellaneous tastes caused by the caffeine and other ingredients derived from green tea.

When stored at low temperature, a tea beverages, particularly a black tea beverage, is generally prone to develop a suspension phenomenon, i.e., a phenomenon of forming a tea creams. As a method of suppressing generation of this tea cream, treatment of a tea extract solution with an enzyme having a tannase activity is known (Patent Document 4). Moreover, it is known that bitterness/astringency of a catechin-containing green tea extract can be reduced by treating it with an enzyme having a tannase activity, thereby reducing a gallate content in the catechins (Patent Documents 5 and 6). As a method of removing caffeine or foreign substances from a green tea extract, the adsorption method (Patent Documents 7 and 8), and the extraction method (Patent Document 9) are known.
[Patent Document 1] JP-A-60-156614
[Patent Document 2] JP-A-3-133928
[Patent Document 3] JP-A-59-219384
[Patent Document 4] JP-A-51-115999
[Patent Document 5] JP-A-2004-321105
[Patent Document 6] JP-A-2005-130809
[Patent Document 7] JP-A-6-142405
[Patent Document 8] JP-A-2004-222719
[Patent Document 9] JP-A-2005-270094

### [Summary of the Invention]

The present invention provides a process for producing a purified green tea extract, which includes mixing a green tea extract treated with an enzyme having a tannase activity in a mixed solution containing an organic solvent and water at a mass ratio of from 60/40 to 90/10, and separating, from the mixture, a precipitate thus formed.

The present invention also provides a purified green tea extract (a) containing non-polymer catechins having a solid content of from 10 to 60 mass%, (b) having a gallate percentage, in the non-polymer catechins, of from 0 to 50 mass%, (c) having a caffeine/non-polymer catechin mass ratio of from 0 to 0.25, and (d) having a (protein + dietary fiber)/nonpolymer catechin mass ratio of 0.12 or less; and a packaged beverage containing the purified green tea extract.

### [Detailed Description of the Invention]

The conventional treatment of a green tea extract with an enzyme having a tannase activity has the problem such that although bitterness/astringency is reduced thereby, it is impossible to reduce the amount of miscellaneous substances such as dietary fiber in the extract, so that miscellaneous tastes derived from green tea remain and improvement of the total taste is hampered. Moreover, during the treatment with an enzyme having a tannase activity, tannase mixed in the extract solution is deactivated by heat treatment or the like and a protein derived from the deactivated enzyme remains in the green tea extract after treatment. The protein is an allergic substance which has become a problem in recent years so that there is a demand for a method capable of reducing proteins derived from the enzyme or green tea. Also the method of removing caffeine or foreign substances from a green tea extract has the problem such that although it succeeds in reduction of miscellaneous tastes due to caffeine or foreign substances, it does not succeed in reduction of bitterness/astringency.

The present invention provides a process of efficiently preparing a purified green tea extract having a high concentration of non-polymer catechins, having improved taste because bitterness/astringency and miscellaneous tastes due to dietary fiber derived from green tea are reduced, having a reduced protein content, and easy to drink.

With a view to simultaneously overcoming two conflicting problems, that is, improvement in an extraction efficiency of non-polymer catechins and reduction in a protein content, bitterness/astringency, and miscellaneous tastes, the present inventors have found that non-polymer catechins can be extracted efficiently by treating a green tea extract with an enzyme having a tannase activity, mixing the resulting extract in a mixed solution containing an organic solvent and water at a predetermined ratio, and separating, from the resulting mixture, a precipitate thus formed and that in the extract thus obtained, bitterness/astringency and miscellaneous tastes due to dietary fiber derived from green tea are reduced greatly and moreover, a protein content is reduced.

The purified green tea extract of the present invention can be prepared by a simple preparation process and the purified green tea extract thus obtained has still a high non-polymer catechin concentration in spite of a drastic reduction in miscellaneous taste and bitterness/astringency and a reduction in a protein content, and has a good hue. A packaged beverage containing the purified green tea extract is easy to drink because it has neither miscellaneous taste nor bitterness/astringency derived from green tea and has a clear and stable appearance.

The green tea extract to be used as a raw material in the present invention contains at least one of non-polymer catechins. The term "non-polymer catechins" as used herein is a generic term, which collectively encompasses non-epicatechins such as catechin, gallocatechin, catechin gallate, and gallocatechin gallate, and epicatechins such as epicatechin, epigallocatechin, epicatechin gallate, and epigallocatechin gallate.

The term "non-polymer catechin gallates" as used herein is a generic term, which collectively encompasses four gallates, that is, catechin gallate, gallocatechin gallate, epicatechin gallate, and epigallocatechin gallate. The term "gallate percentage" means a percentage of the total mass of the four non-polymer catechin gallates relative to the total mass of catechin, gallocatechin, catechin gallate, gallocatechin gallate, epicatechin, epigallocatechin, epicatechin gallate, and epigallocatechin gallate.

The green tea extract to be used in the present invention is an extract solution obtained from tea leaves such as green tea, black tea, and Oolong tea. An extract obtained using tea leaves subjected to contact processing with supercritical carbon dioxide may be employed. In addition, mixtures of a tea extract with caffeine derived from a caffeine-containing plant such as coffee can also be employed. They may be concentrated or dried. Specific examples of tea leaves used in the present invention include raw tea leaves available from the Genus *Camellia,* for example, *C. sinensis* and *C. assamica,* and the Yabukita variety, or hybrids thereof, and tea leaves manufactured from these raw tea leaves. Specific examples of the tea leaves manufactured from them include green teas such as sencha (middle-grade green tea), bancha (rough green tea), gyokuro (shaded green tea), tencha (powdered tea) and kamairicha (roasted tea).

Extraction for obtaining a green tea extract from tea leaves is carried out, for example, under stirring while using water or a water soluble organic solvent, or a mixture thereof as an extraction solvent. Upon extraction, an organic acid or an organic acid salt such as sodium ascorbate may be added to the extraction solvent in advance. A process of extracting under so-called non-oxidizing atmosphere, more specifically, extracting while carrying out deaeration by boiling or passing an inert gas such as nitrogen, thereby eliminating dissolved oxygen may be used in combination. An extract obtained in such a manner is used as is or after concentrated or dried. The green tea extract may be in any one of the liquid, slurry, semi-solid and solid forms. When the extraction solvent for tea leaves contains an organic solvent, it is preferably removed before treatment with an enzyme from the viewpoint of preventing deactivation of the enzyme.

As the green tea extract to be used in the present invention, the extract solution from tea leaves may be replaced by a concentrated or dried green tea extract diluted with water or dissolved in water, or a combination of the extract solution from tea leaves and the concentrated or dried green tea extract diluted with water or dissolved in water.
The term "concentrated or dried green tea extract" means a concentrate of an extract of tea leaves with hot water or a water soluble organic solvent. It is prepared by a process as described, for example, in JP-A-59-219384, JP-A-4-20589, JP-A-5-260907, or JP-A-5-306279. More specifically, as the green tea extract, commercially available rough catechin preparations such as "Polyphenon" of Tokyo Food Techno, "THEA-FLAN" of ITO EN, and "Sunphenon" of Taiyo Kagaku can also be used.

In the present invention, first, the green tea extract is treated with an enzyme having a tannase activity. The term "an enzyme having a tannase activity" as used herein means an enzyme having an activity of degrading tannins and an enzyme having such an activity can be used. Although its origin is not particularly limited, examples include tannase available by culturing of tannase-producing microorganisms belonging to genera *Aspergillus, Penicillium, Rhizopus,* and *Mucor* in a conventional manner. The tannase may be either an unpurified product or a purified product. Specific examples of commercially available enzymes having a tannase activity include tannase "Kikkoman" (product of Kikkoman), tannase "Sankyo" (product of Sankyo Lifetech), and Sumiteam TAN (product of SHINNIHON KAGAKU KOGYO). By the treatment with the enzyme having a tannase activity, the ester bond of a gallate in non-polymer catechins is hydrolyzed and a gallate percentage in the non-polymer catechins decreases.

The concentration of the non-polymer catechins when the green tea extract is treated with the enzyme having a tannase activity is preferably from 0.1 to 22 mass%, more preferably from 0.25 to 18 mass%, even more preferably from 0.5 to 16.5 mass%. The concentration less than 0.1 mass% is not preferred from the viewpoint of productivity because a burden on a subsequent concentration step becomes unduly large. The concentration exceeding 22 mass%, on the other hand, is not preferred from the viewpoint of productivity and taste of the green tea extract, because it takes long time to complete hydrolysis treatment. Treatment with the enzyme having a tannase activity is carried out specifically in the following manner. In order to reduce the amount of the non-polymer catechin gallates and to terminate an enzyme reaction at an optimum non-polymer catechin gallate percentage, the enzyme having a tannase activity in the powder or solution form is added to the green tea extract so that it falls within a range of preferably from 1 to 300 Unit/g of the non-polymer catechins, more preferably from 3 to 200 Unit/g of the non-polymer catechins, even more preferably from 5 to 150 Unit/g of the non-polymer catechins. The term "1 Unit" as used herein means an amount of an enzyme for hydrolyzing 1 µmol of an ester bond contained in tannic acid in water of 30°C. During the enzyme treatment, the temperature is retained at preferably from 5 to 60°C, more preferably from 10 to 50°C, even more preferably from 10 to 45°C.

In the treatment of the present invention with the enzyme having a tannase activity, the non-polymer catechin gallate percentage is reduced by preferably 5 mass% or greater from the viewpoint of reducing bitterness/astringency. If it is less than 5 mass%, the amount of the non-polymer catechin gallate is not reduced sufficiently and an effect of the treatment for reducing bitterness/astringency cannot be expected. From the viewpoint of suppressing bitterness/astringency, the gallate percentage in the non-polymer catechins in the green tea extract is preferably from 0 to 50 mass%. More preferably, it is controlled to fall within a range of from 5 to 48 mass%. In the control of the gallate percentage by the treatment with the enzyme having a tannase activity, a terminal point of the reaction is preferably determined by the pH of the green tea extract at the time of the treatment. The pH at the terminal point of the reaction is preferably from 3.0 to 6.0, more preferably from 3.3 to 5.3.

The hydrolysis reaction with the enzyme is terminated by deactivation of an enzyme activity. The temperature for deactivating the enzyme is preferably from 60 to 100°C, more preferably from 75 to 95°C. When the deactivation temperature is less than 60°C, it is difficult to deactivate the enzyme sufficiently in a short time so that reaction still proceeds and the enzyme reaction cannot be terminated within a desired non-polymer catechin gallate percentage. The retention time after the temperature reaches the deactivation temperature is preferably from 10 to 1800 seconds, more preferably from 30 to 1200 seconds, even more preferably from 30 to 600 seconds from the viewpoint of enzyme deactivation and taste. The enzyme is deactivated, for example, by batch heating or continuous heating while holding it by using a plate type heat exchanger or holding tube.

Before or after the enzyme treatment, the green tea extract solution is preferably centrifuged to remove therefrom fine powder remaining in the extract solution. A centrifuge used for it has preferably an enough centrifugal force to remove fine powder. Industrially, a continuous centrifuge suited for treatment of a large amount of the extract solution is used.

The green tea extract treated with the enzyme having a tannase activity is then preferably concentrated under reduced pressure or concentrated by the treatment with a reverse osmotic membrane. It may be, for example, spray dried or freeze dried if necessary. The green tea extract after the enzyme treatment may be in the form of a liquid, a slurry, a semi-solid, or a solid. From the viewpoint of dispersibility in an organic solvent such as ethanol, it is preferably in the form of a slurry, a semi-solid, or a solid. As the green tea extract of the present invention treated with the enzyme having a tannase activity, a mixture obtained by mixing the green tea extract treated with the enzyme having a tannase activity with an untreated green tea extract may be used.

The purified green tea extract of the present invention can be prepared by mixing the green tea extract treated with the enzyme having a tannase activity in a mixed solution containing an organic solvent and water at a mass ratio of from 60/40 to 90/10 and then separating, from the resulting mixture, a precipitate thus formed.

Examples of the organic solvent to be used for the preparation of the purified green tea extract of the present invention include ethanol, methanol, acetone, and ethyl acetate. Of these, hydrophilic organic solvents such as methanol, ethanol, and acetone are preferred, of which ethanol is highly preferred in consideration of the addition to food. As water, ion exchanged water, tap water, and natural water can be used. Although the organic solvent and water may be mixed in advance or individually mixed with the green tea extract, they are preferably mixed with the green tea extract as a mixed solution.

In the present invention, when the green tea extract is dispersed in the mixed solution of an organic solvent and water, an organic solvent/water mass ratio is adjusted to fall within a range of from 60/40 to 90/10, preferably from 65/35 to 90/10 from the viewpoint of an extraction efficiency of non-polymer catechins and taste. The precipitate formed by mixing is removed, for example, filtration.

In the present invention, treatment can be efficiently conducted by adding from 10 to 40 parts by mass, preferably from 10 to 30 parts by mass, each in terms of a dry mass, of the green tea extract to 100 parts by mass of the mixed solution of an organic solvent and water.

In the present invention, in mixing the green tea extract in the mixed solution of an organic solvent and water, after the green tea extract is dissolved in a mixed solution containing an organic solvent and water at a mass ratio of from 0/100 to 60/40, preferably from 0/100 to 55/45, a mixed solution containing an organic solvent and water at a mass ratio of from 90/10 to 100/0 is added to the resulting solution to adjust the organic solvent/water mass ratio to from 60/40 to 90/10, preferably from 65/35 to 90/10. Alternatively, after the green tea extract is mixed in a mixed solution containing an organic solvent and water at a mass ratio of from 100/0 to 90/10, preferably from 100/0 to 92/8, a mixed solution having an organic solvent/water mass ratio of from 0/100 to 60/40 is added to the resulting solution to adjust the organic solvent/water mass ratio to from 60/40 to 90/10, preferably from 65/35 to 90/10. The time necessary for adding water and the organic solvent individually or as a mixture is from about 10 to 60 minutes and it is preferred to add them dropwise slowly. Dropwise addition under stirring is preferred in order to raise the extraction efficiency of catechins. It is more preferred to have an aging time of from about 10 to 360 minutes after completion of the dropwise addition. These treatments can be performed at from 10 to 60°C, more preferably from 10 to 50°C, even more preferably from 10 to 40°C. The green tea extract may be added in one portion or may be added in two or more portions, for example, in two to four portions. The precipitate thus formed is removed by filtration or the like method.

In the present invention, in order to remove caffeine if necessary, it is preferred to bring the green tea extract into contact with an active carbon and/or an acid clay or an activated clay when the extract is mixed in the mixed solution of an organic solvent and water.

Any active carbon can be used without particular limitation insofar as it is ordinarily-used industrial-level one. Commercially available products such as "ZN-50" (product of Hokuetsu Tansosha), "KURARAY COAL GLC", "KURARAY COAL PK-D" and "KURARAY COAL PW-D" (each, product of KURARAY CHEMICAL), and "Shirasagi AW50", "Shirasagi A", "Shirasagi M" and "Shirasagi C" (each, product of Takeda Pharmaceutical) can be used. An active carbon has preferably a micropore volume of from 0.01 to 0.8 mL/g, more preferably from 0.1 to 0.7 mL/g, while it has preferably a specific surface area of from 800 to 2000 m²/g, more preferably from 900 to 1600 m²/g. These physical properties are values based on the nitrogen adsorption method.

The active carbon is added preferably in an amount of from 0.5 to 15 parts by mass, more preferably from 0.5 to 10 parts by mass, even more preferably from 1.0 to 8 parts by mass to 100 parts by mass of the mixed solution of an organic solvent and water. Unduly small amounts of the active carbon deteriorate the caffeine removal efficiency, while unduly large amounts of it increase the cake resistance during filtration. Amounts outside the above-described range are therefore not preferred.

An acid clay or an activated clay to be used for the preparation contains, as typical chemical components, SiO₂, Al₂O₃, Fe₂O₃, CaO, MgO and the like. Its SiO₂/Al₂O₃ ratio is preferably from 3 to 12, more preferably from 4 to 9. A composition containing from 2 to 5 mass% of Fe₂O₃, from 0 to 1.5 mass% of CaO, and from 1 to 7 mass% of MgO is preferred. An activated clay is a compound obtained by treating naturally occurring acid clay (montmorillonite clay) with a mineral acid such as sulfuric acid and having a porous structure with a large specific surface area and adsorption capacity. It is known that further acid treatment of an acid clay changes its specific surface area, thereby improving the decoloring capacity and changing the physical properties.

The specific surface area of the acid clay or activated clay differs depending on the degree of acid treatment, but is preferably from 50 to 350 m²/g. Its pH (of a 5 mass% suspension) is preferably from 2.5 to 8, more preferably from 3.6 to 7. For example, commercially available "Mizuka Ace #600" (product of Mizusawa Industrial Chemicals) is usable as the acid clay.

The acid clay or activated clay is added preferably in an amount of from 0.5 to 30 parts by mass, more preferably from 1.5 to 20 parts by mass, even more preferably from 2.5 to 15 parts by mass to 100 parts by mass of the mixed solution of an organic solvent and water. Unduly small amounts of the acid clay or activated clay deteriorate the caffeine removal efficiency, while unduly large amounts increase the cake resistance during filtration. Amounts outside the above-described range are therefore not preferred.

When the active carbon is used in combination with the acid clay or the activated clay, the acid clay or activated clay may be used at a mass ratio of from 1 to 10 relative to the active carbon, with an active carbon:acid clay or activated clay mass ratio of from 1:1 to 1:6 being highly preferred.

In the present invention, in order to selectively remove caffeine if necessary, it is preferred to bring the green tea extract into contact with the active carbon and/or the acid clay or the activated clay when the extract is mixed in the mixed solution of an organic solvent and water. In this case, no particular limitation is imposed on the contact order of the green tea extract, the mixed solution of an organic solvent and water, and the active carbon and/or the acid clay or the activated clay. Examples include (1) a method of adding the green tea extract to the mixed solution of an organic solvent and water and then bringing the resulting mixture into contact with the active carbon and then, the acid clay or the activated clay; (2) a method of adding the green tea extract to the mixed solution of an organic solvent and water and then bringing the resulting mixture into contact with the acid clay or the activated clay, and then with the active carbon; (3) a method of adding the active carbon to the mixed solution of an organic solvent and water, adding the green tea extract to the resulting mixture, and then adding the acid clay or the activated clay; and (4) a method of adding the acid clay or the activated clay to the mixed solution of an organic solvent and water, adding the green tea extract to the resulting mixture, and then adding active carbon.
Between the addition of each component and addition of the next component, filtration is preferably performed. When the green tea extract is added in two or more portions, filtration may be performed between them.

In the present invention, in the case where after the green tea extract is dissolved in the mixed solution of an organic solvent and water, the organic solvent, or water, it is brought into contact with the active carbon and/or the acid clay or activated clay if necessary upon adjustment of the organic solvent/water mass ratio to from 60/40 to 90/10, it may be brought into contact and mixed with the active carbon and/or the acid clay or activated clay before adjustment of the organic solvent/water mass ratio to from 60/40 to 90/10; or it may be brought into contact and mixed with the active carbon and/or the acid clay or activated clay after adjustment of the organic solvent/water mass ratio to from 60/40 to 90/10. Then, the active carbon and/or the acid clay or activated clay are removed, together with the precipitate thus formed. Contact with the active carbon may be performed prior to the removal of the precipitate or after removal of the precipitate.

The contact of the green tea extract solution with the active carbon and the acid clay or activated clay may be performed by either one of batch system or continuous treatment using a column. Typical methods include a method of adding the active carbon in the powder form to the green tea extract solution, stirring the mixture, selectively adsorbing caffeine to the active carbon, and obtain a caffeine-free filtrate by filtration; and a method of selectively adsorbing caffeine to a column filled with the active carbon in the granular form by continuous treatment. The contact between the green tea extract and the active carbon is preferably performed by continuous treatment using an active carbon column.

A solution of the green tea extract obtained by mixing the green tea extract treated with the enzyme having a tannase activity in the mixed solution containing an organic solvent and water at a mass ratio of from 60/40 to 90/10, and separating a precipitate thus formed, and if necessary, bringing the residue into contact with the active carbon and the acid clay or the activated clay is distilled, for example, under reduced pressure to remove the organic solvent from the reaction system. The green tea extract after the treatment may be either in the liquid form or solid form. The green tea extract in the solid form may be obtained by converting the extract into powder by freeze drying or spray drying.

The purified green tea extract contains, in the solid content thereof, preferably from 10 to 60 mass%, more preferably from 15 to 60 mass%, even more preferably from 20 to 60 mass% of non-polymer catechins. A non-polymer catechin gallate percentage in the purified green tea extract is preferably from 0 to 50 mass%, more preferably from 5 to 48 mass%. Moreover, with regard to the caffeine concentration in the purified green tea extract, a caffeine/non-polymer catechin mass ratio is preferably from 0 to 0.25, more preferably from 0 to 0.18, even more preferably from 0 to 0.12. With regard to the concentration of (protein + dietary fiber) in the purified green tea extract, a (protein + dietary fiber)/non-polymer catechin mass ratio is preferably 0.12 or less, more preferably 0.1 or less.

Although in the purified green tea extract, bitterness/astringency and miscellaneous tastes due to dietary fiber derived from green tea are reduced greatly and a protein content is also reduced, the purified green tea extract still has a high non-polymer catechin concentration and at the same time has a good hue. The purified green tea extract is therefore useful as a packaged beverage, particularly useful as tea beverages such as green tea, Oolong tea, blend tea, black tea, and barley tea, and non-tea beverages such as sports drink, isotonic drink, and near water.

The packaged beverage of the present invention contains the non-polymer catechins, which have been dissolved in water, in an amount of from 0.03 to 1.0 mass%, preferably from 0.04 to 0.5 mass%, more preferably from 0.06 to 0.4 mass%, even more preferably from 0.07 to 0.4 mass%, even more preferably from 0.08 to 0.3 mass%, even more preferably from 0.09 to 0.3 mass%, even more preferably from 0.1 to 0.3 mass%. The non-polymer catechin contents falling within the above-described ranges are preferred from the viewpoint of easy ingestion of a large amount of the non-polymer catechins and color tone of the beverage just after preparation. The concentration of the non-polymer catechins can be adjusted by the amount of the purified green tea extract treated with the enzyme having a tannase activity.

The non-polymer catechin gallate percentage of the packaged beverage containing the purified green tea extract treated with the enzyme having a tannase activity according to the present invention is preferably from 0 to 63 mass%, more preferably from 5 to 56 mass%, even more preferably from 5 to 48 mass%. With regard to the concentration of caffeine, a caffeine/non-polymer catechins ratio is preferably from 0 to 0.25, more preferably from 0 to 0.18, even more preferably from 0 to 0.12. The gallate percentage or caffeine concentration can also be controlled by adding another green tea extract or green tea extract solution.

The packaged beverage of the present invention may contain a sodium ion and/or a potassium ion. The beverage of the present invention having such an ion incorporated therein is useful as a drink type such as sports drink and isotonic drink. The term "sports drink" is generally defined as a drink capable of rapidly replenishing, after exercise, water and minerals lost as sweat.

Sodium and potassium are primary physiological electrolytes. These ion components can be incorporated in the packaged beverage by adding water soluble components or inorganic salts corresponding to them. They are also present in juices and green tea extracts. The amount of an electrolyte or ion component in the beverage of the present invention is its content in the final packaged beverage provided for drinking. The concentration of each electrolyte is expressed in terms of ion concentration. A potassium ion component may be mixed in the form of a salt such as potassium chloride, potassium carbonate, potassium sulfate, potassium acetate, potassium hydrogencarbonate, potassium citrate, potassium phosphate, potassium hydrogenphosphate, potassium tartrate or potassium sorbate, or a mixture thereof, or as a component of a fruit juice or tea added. The packaged beverage of the present invention contains a potassium ion in an amount of preferably from 0.001 to 0.2 mass%, more preferably from 0.002 to 0.15 mass%, even more preferably from 0.003 to 0.12 mass%. A sodium ion component may be mixed in the form of an easily available sodium salt such as sodium chloride, sodium carbonate, sodium hydrogencarbonate, sodium citrate, sodium phosphate, sodium hydrogenphosphate, sodium tartrate, or sodium benzoate or a mixture thereof, or as a component of a fruit juice or tea added. A lower sodium concentration is preferred in order to facilitate absorption of water by osmotic pressure, but it does not preferably cause suction of water from the body to the intestine by osmotic pressure. The concentration of sodium necessary for it is preferably lower than the plasma sodium. The packaged beverage of the present invention contains a sodium ion in an amount of preferably from 0.001 to 0.5 mass%, more preferably from 0.002 to 0.4 mass%, even more preferably from 0.003 to 0.2 mass%. The packaged beverage of the present invention may further contain, in addition to potassium and sodium ions, chloride ions in an amount of from 0.001 to 0.5 mass%, preferably from 0.002 to 0.4 mass%, most preferably from 0.003 to 0.3 mass%. The chloride ion component may be mixed in the form of a salt such as sodium chloride or potassium chloride. Further, calcium, magnesium, and trace ions such as zinc and iron may also be mixed. These ions may also be mixed in the form of a salt. The total amount of ions present in the beverage includes an amount of ions added and an amount of ions naturally existing in the beverage. When sodium chloride is added, for example, the amount of a sodium ion and the amount of a chloride ion are included in the total amount of ions.
When the sodium ion or potassium ion concentration is unduly small, the resulting beverage does not leave a satisfactory feeling in taste and cannot replenish minerals effectively. When it is unduly large, on the other hand, taste of a salt itself becomes prominent and such a beverage is not suited for continuous drinking for a long time. The concentrations of the sodium ion or potassium ion outside the above-described range are therefore not preferred.

In the packaged beverage according to the present invention, a sweetener may be added to improve its taste. Usable examples of the sweetener include artificial sweeteners, carbohydrates, and glycerols (for example, glycerin). The content of such a sweetener in the packaged beverage of the present invention is preferably from 0.0001 to 20 mass%, more preferably from 0.001 to 15 mass%, even more preferably from 0.001 to 10 mass%. When the amount of the sweetener is below the above-described lower limit, the beverage has almost no sweet taste and it loses a balance among sweetness, sourness and saltiness. When the amount of the sweetener exceeds the upper limit, on the other hand, the sweetness gets stuck in the throat and deteriorates smooth drinking.
As sweeteners usable in the packaged beverage of the present invention, artificial sweeteners are preferred. Artificial sweeteners usable in the present invention include, for example, high-sweetness sweeteners such as saccharin, saccharin sodium, aspartame, acesulfame-K, sucralose, and neotame; and sugar alcohols such as sorbitol, erythritol and xylitol. As commercial products, "SLIM-UP SUGAR" composed of aspartame, "LAKANTO-S" containing erythritol, and "PALSWEET" composed of erythritol and aspartame are usable.

When the packaged beverage of the present invention is an energy boosting one, a carbohydrate sweetener is preferably used.
The carbohydrate sweetener usable in the present invention is a soluble carbohydrate. The soluble carbohydrate plays a dual role as a sweetener and an energy source. In selecting a carbohydrate for use in the beverage of the present invention, it is preferred to consider a sufficient gastric emptying rate and an intestinal absorption rate.

The carbohydrate may be a mixture of glucose and fructose, a carbohydrate hydrolyzable in the digestive tract, or a carbohydrate constituting glucose and fructose. The term "carbohydrate" as used herein embraces monosaccharides, disaccharides, oligosaccharides, and complex polysaccharides, and mixtures thereof.

Monosaccharides usable here include, for example, tetroses, pentoses, hexoses, and ketohexoses. Examples of the hexoses include aldohexoses such as glucose known as grape sugar. The content of glucose in the packaged beverage of the present invention is preferably from 0.0001 to 20 mass%, more preferably from 0.001 to 15 mass%, even more preferably from 0.001 to 10 mass%. Fructose known as fruit sugar is a ketohexose. The content of fructose in the packaged beverage of the present invention is preferably from 0.0001 to 20 mass%, more preferably from 0.001 to 15 mass%, even more preferably from 0.001 to 10 mass%.
In the beverage of the present invention, single use of the artificial sweetener, or combined use of the artificial sweetener and a glucose compound or the artificial sweetener and a fructose compound is preferred.

As the carbohydrate sweetener, a soluble carbohydrate can be used in the present invention. Examples of the oligosaccharide include carbohydrates (that is, sucrose, maltodextrin, corn syrup, and fructose-rich corn syrup) capable of forming these two monosaccharides in vivo. Disaccharides are important as oligosaccharides. Examples of the disaccharide include sucrose known as cane sugar or beet sugar. The content of sucrose in the packaged beverage of the present invention is preferably from 0.001 to 20 mass%, more preferably from 0.001 to 15 mass%, especially preferably from 0.001 to 10 mass%.

The packaged beverage of the present invention has preferably a pH of from 2 to 7, more preferably from 2 to 6.5, even more preferably from 3 to 4.5 from the viewpoint of stability of catechins. The beverage having an unduly low pH has strong sourness and emits an offensive odor. When the beverage has an unduly high pH, on the other hand, it loses balance of taste and preference for it lowers. The pH outside the above-described range is therefore not preferred.

Incorporation of a bitterness/astringency suppressor in the packaged beverage of the present invention is preferred because it smoothens drinking. Although no particular limitation is imposed on the bitterness/astringency suppressor, a cyclodextrin is preferred. As the cyclodextrin, an α-, β- or γ-cyclodextrin or a branched α-, β- or γ-cyclodextrin may be used. In the beverage, a cyclodextrin may be incorporated preferably in an amount of from 0.005 to 0.5 mass%, preferably from 0.01 to 0.3 mass%. The packaged beverage of the present invention may contain, either singly or in combination, additives such as antioxidants, flavors, various esters, organic acids, organic acid salts, inorganic acids, inorganic acid salts, inorganic salts, colorants, emulsifiers, preservatives, seasoning agents, sweeteners, acidulants, gums, emulsifiers, oils, vitamins, amino acids, fruit juice extracts, vegetable extracts, flower honey extracts, pH regulators, quality stabilizers, and the like.

In the beverage of the present invention, flavors and fruit juices are preferably incorporated to improve its taste. Natural or synthetic flavors and fruit juices may be used in the present invention. They can be selected from fruit juices, fruit flavors, and plant flavors, and mixtures thereof. For the development of attractive taste, preferred are combinations of fruit juice and tea flavor, preferably green tea or black tea flavor. Preferred examples of the fruit juice include apple, pear, lemon, lime, mandarin, grapefruit, cranberry, orange, strawberry, grape, kiwi, pineapple, passion fruit, mango, guava, raspberry and cherry juices. Of these, citrus juices, preferably, grapefruit, orange, lemon, lime, and mandarin juices, mango juice, passion fruit juice and guava juice are preferred, with the mixtures thereof being most preferred. Preferred examples of natural flavors include jasmine, chamomile, rose, peppermint, Crataegus cuneata, chrysanthemum, water caltrop, sugarcane, lychee, and bamboo shoot. The juice is incorporated in the beverage of the present invention preferably in an amount of from 0.001 to 20 mass%, more preferably from 0.002 to 10 mass%. Fruits flavor, plant flavor, and tea flavor, and mixtures thereof may also be used as the juice. Particularly preferred flavors include citrus flavors such as orange flavor, lemon flavor, lime flavor, and grapefruit flavor. In addition to such citrus flavors, various other fruits flavors such as apple flavor, grape flavor, raspberry flavor, cranberry flavor, cherry flavor, and pineapple flavor are also usable. These flavors may be derived from natural sources such as fruit juices and balms, or may be synthesized.
The "flavor" as used herein embraces blends of various flavors, for example, a blend of lemon and lime flavors and a blend of a citrus flavor and selected spice. Such a flavor may be mixed preferably in an amount of from 0.0001 to 5 mass%, more preferably from 0.001 to 3 mass% in the beverage of the present invention.

The packaged beverage according to the present invention may also contain an acidulant as needed. Examples of the acidulant include edible acids such as malic acid, citric acid, tartaric acid and fumaric acid. The acidulant may also be used to regulate the pH of the beverage of the present invention. The beverage of the present invention has preferably a pH of from 2 to 7. As a pH regulator, an organic or inorganic edible acid may be used. The acid may be used either in a non-dissociated form or in the form of its salt such as potassium or sodium hydrogenphosphate or potassium or sodium dihydrogenphosphate. Preferred acids include edible organic acids such as citric acid, malic acid, fumaric acid, adipic acid, phosphoric acid, gluconic acid, tartaric acid, ascorbic acid, acetic acid, and malic acid, and mixtures thereof, with citric acid and malic acid being most preferred. The acidulant is also useful as an antioxidant for stabilizing the components in the beverage. Examples of commonly employed antioxidants include ascorbic acid and EDTA (ethylenediaminetetraacetic acid) and salts thereof, and plant extracts.

The beverage of the present invention may contain vitamins further. Preferred vitamins include vitamin A, ascorbic acid, and vitamin E. Other vitamins such as vitamin D and vitamin B may also be added. Minerals may also be incorporated in the beverage of the present invention. Preferred minerals include calcium, chromium, copper, fluorine, iodine, iron, magnesium, manganese, phosphorus, selenium, silicon, molybdenum, and zinc. Of these, magnesium, phosphorus, and iron are highly preferred.

Similar to typical beverages, the packaged beverage of the invention can be provided as a beverage packed in a molded package having polyethylene terephthalate as a principal component (a so-called PET bottle), a metal can, a paper container combined with a metal foil or plastic film, a bottle or the like. The term "packaged beverage" as used herein means a beverage that can be consumed without dilution.

The packaged beverage of the present invention can be produced, for example, by filling the beverage in a container such as a metal can and, when heat sterilization is feasible, conducting heat sterilization under sterilization conditions as prescribed in the Food Sanitation Act of Japan. When the package is not suited for retort sterilization such as PET bottles and paper containers, employed is a process of subjecting the beverage to high-temperature short-time sterilization, for example, by a plate-type heat exchanger under similar sterilization conditions to those described above, cooling the resulting beverage to a predetermined temperature, and then filling the beverage in a package. Under aseptic conditions, another component may be filled in the container which has already contained the beverage. After heat sterilization under acidic conditions, the pH of the beverage may be brought back to neutral under aseptic conditions or after heat sterilization under neutral conditions, the pH of the beverage may be brought back to acidic under aseptic conditions.

### [Examples]

### Measurement of Non-polymer Catechins

A non-polymer catechin content of a non-polymer catechin composition, which has been diluted with distilled water and then filtered through a filter (0.8 µm), is measured by high-performance liquid chromatograph ("SCL-10AVP", product of Shimadzu Corporation) equipped with "L-Column TM ODS" (packed column for octadecyl-introduced liquid chromatograph, 4.6 mmφ × 250 mm: product of Chemicals Evaluation and Research Institute, Japan) at a column temperature of 35°C by a gradient method using Solution A and Solution B. Measurement is conducted under the following conditions: use of a solution of 0.1 mol/L of acetic acid in distilled water as a mobile phase solution A and a solution of 0.1 mol/L of acetic acid in acetonitrile as a mobile phase solution B, an injection amount of a sample: 20 µL, and a wavelength of UV detector at 280 nm.

### Measurement of Caffeine

### (Analyzer)

HPLC (product of Hitachi, Ltd.) is employed.
Plotter: "D-2500", Detector: "L-4200"
Pump: "L-7100", Autosampler: "L-7200"
Column: "Inertsil ODS-2", 2.1 mm inner diameter × 250 mm length

### (Analytical conditions)

Injection amount of sample: 10 µL, flow rate: 1.0 mL/min Detection wavelength of ultraviolet absorptiometer: 280 nm Eluent A: aqueous solution of 0.1 mol/L acetic acid, Eluent B: acetonitrile solution of 0.1 mol/L acetic acid Concentration gradient conditions (vol.%)

| Time | Eluent A | Eluent B |
|---|---|---|
| 0 minute | 97% | 3% |
| 5 minutes | 97% | 3% |
| 37 minutes | 80% | 20% |
| 43 minutes | 80% | 20% |
| 43.5 minutes | 0% | 100% |
| 48.5 minutes | 0% | 100% |
| 49 minutes | 97% | 3% |
| 62 minutes | 97% | 3% |
| (Retention time of caffeine) | | |
| Caffeine: 27.2 minutes | | |

The mass% is determined from the area % based on the standard substance.

### Evaluation of Color tone

The purified green tea extract is diluted with ion exchanged water to give a non-polymer catechin concentration of 180 mg/100 mL and the appearance of the sample thus obtained is visually evaluated.

### Visual Evaluation of Stability

The purified green tea extract is diluted with ion exchanged water to give a non-polymer catechin concentration of 100 mg/100 mL. After the sample thus obtained for evaluation is filled in a 50 mL vial bottle, its state is observed on an illuminator and visually evaluated.

### Evaluation of Purified Product

### (Evaluation of taste)

The purified green tea extract is diluted with ion exchanged water to give a non-polymer catechin concentration of 180 mg/100 mL and miscellaneous taste and bitterness/astringency of the diluted extract are evaluated by a panel of five experts.

### Measurement of Protein and Free Amino Acid

Calculating formula of (amount of protein + free amino acid): (total nitrogen in a purified green tea extract - caffeine nitrogen) × conversion factor Determination Method of Total Nitrogen:
Total nitrogen is determined by the nitrogen determination conversion method (macro Kjeldahl method) in accordance with the analysis method of nutrients in nutritional labeling standards (Notification No. 146 of the Ministry of Health, Labour and Welfare issued May 1996) (a method presented in the third column of the first appendix of Nutritional labeling Standards).

### Caffeine Nitrogen:

Caffeine nitrogen is determined by converting the amount of caffeine as determined by the measurement method described in Column (0057) into the nitrogen molecular weight (Mw=54) in the molecular weight of caffeine (Mw=194). Conversion Coefficient:

A conversion coefficient (6.25) in accordance with the analysis method of nutrients in nutritional labeling standards (Notification No. 146 of the Ministry of Health, Labor and Welfare issued May 1996) (a method presented in the third column of the first appendix of Nutritional labeling Standards) is used.

### Measurement of Free Amino Acid

### Free Tryptophan

### (Analyzer)

Model: "LC-10AD" (Shimadzu Corporation)
Detector: "RF-10A", a fluorescent spect rophotometer ×1
Column: "Inertsil ODS-2", 4.6 mm inner diameter × 250 mm length

### Free Amino Acids Other Than Free Tryptophan

### (Analyzer)

Model: "L-8800 high-speed amino acid analyzer" (product of Hitachi, Ltd.)
Column: "Hitachi Custom Ion Exchange Resin", 4.6 mm inner diameter × 60 mm length
Mobile phase: "L-8500", PF buffer

### Reactant: Ninhydrin reagent

The amount of protein is calculated by subtracting the analysis value of free amino acids from the analysis value of (protein + free amino acids):

### Measurement of Dietary fiber

The amount of dietary fiber is determined by the enzyme-weight method (Prosky method) in accordance with the analysis method of nutrients in nutritional labeling standards (Notification No. 146 of the Ministry of Health, Labor and Welfare issued May 1996) (a method presented in the third column of the first appendix of Nutritional labeling Standards) is used.

### Example 1: Purified green tea extract A

(1) Hot water (45 kg) of 88°C was added to 3 kg of green tea leaves (grown in Kenya, large tea leaves). After batch extraction with stirring for 60 minutes, the mixture was crudely filtered through a 100-mesh sieve and centrifugal operation was carried out to remove fine powder from the extract solution to yield 37.2 kg of "green tea extract solution" (pH 5.4) (non-polymer catechin concentration in the green tea extract solution = 0.89 mass%, a gallate percentage of the green tea extract solution = 52.3 mass%, a caffeine content: 0.17 mass%).
   The green tea extract solution thus obtained was maintained at 15°C and tannase ("Tannase KTFH", product of Kikkoman, 500 U/g) was added to the green tea extract solution so as to give a concentration of 430 ppm. The resulting mixture was maintained for 55 minutes. When the gallate percentage reached 30.5 mass%, the solution was heated to 90°C and maintained for 2 minutes to deactivate the enzyme and thereby stop the reaction (pH 5.1). Then, the reaction mixture was concentrated under reduced pressure at 70°C at 6.7 kpa to a Brix concentration of 20%, followed by spray drying to obtain 0.9 kg of "green tea extract treated with an enzyme having a tannase activity" in the powder form. The green tea extract thus obtained had a non-polymer catechin content of 29.8 mass%, a non-polymer catechin gallate percentage of 30.5 mass%, and a caffeine content of 5.9 mass%.
(2) The green tea extract treated with an enzyme having a tannase activity obtained in (1) (400 g) was poured in 1000 g of a 54 mass % aqueous ethanol solution under stirring conditions of 250 r/min and 40°C. Acid clay ("Mizuka Ace #600", product of Mizsawa Industrial Chemicals, 70 g) was added further and stirring was continued for about 1 hour at a temperature kept at 40°C (pH 4.6). While maintaining the temperature at 40°C, 600 g of a 92 mass% aqueous ethanol solution was added dropwise over 15 minutes. After stirring was continued for further 30 minutes at 40°C, the reaction mixture was cooled to room temperature. Then, a precipitate thus formed and the acid clay were filtered out using a No. 2 filter paper. The solution thus separated was brought into contact with 60 g of active carbon ("KURARAY COAL GLC", product of KURARAY CHEMICAL), followed by filtration through a 0.2-µm membrane filter. Finally, 400 g of ion exchanged water was added to the filtrate, ethanol was distilled off at 40°C and 2.7 kpa, and then a water content was adjusted to yield "purified green tea extract".
A non-polymer catechin content in the purified green tea extract was 22 mass%.
A non-polymer catechin content in the solid content of the purified green tea extract was 39.9 mass%.
A caffeine/non-polymer catechin mass ratio in the purified green tea extract = 0.087
A gallate percentage in the purified green tea extract = 30.9 mass%
A (protein + dietary fiber)/non-polymer catechin mass ratio in the purified green tea extract = 0.09

### Comparative Example 1: Green tea extract treated with an enzyme having tannase activity

(1) Hot water (90 kg) of 89°C was added to 6 kg of green tea leaves (grown in Kenya, large tea leaves). After batch extraction with stirring for 30 minutes, the reaction mixture was crudely filtered through a 100-mesh sieve and centrifugal operation was carried out to remove fine powder from the extract solution to yield 74.7 kg of "green tea extract" (pH 5.3) (non-polymer catechin concentration in the green tea extract solution = 0.91 mass%, a gallate percentage of the green tea extract solution = 51.2 mass%, a caffeine content: 0.17 mass%).
   The green tea extract solution thus obtained was maintained at 25°C and tannase ("Tannase KTFH", product of Kikkoman, 500 U/g) was added to the green tea extract solution so as to give a concentration of 260 ppm. The resulting mixture was maintained for 75 minutes. When the gallate percentage reached 39.6 mass%, the solution was heated to 90°C and maintained for 2 minutes to deactivate the enzyme and thereby stop the reaction (pH 5.1). Then, the reaction mixture was concentrated using a reverse osmotic (RO) membrane to a Brix concentration of 25%, followed by spray drying to obtain 1.9 kg of "green tea extract treated with an enzyme having a tannase activity" in the powder form.
A non-polymer catechin content in the green tea extract was 30.8 mass%.
A caffeine/non-polymer catechin mass ratio in the green tea extract = 0.211
A gallate percentage in the green tea extract = 39.4%
A (protein + dietary fiber)/non-polymer catechin mass ratio in the green tea extract = 0.28

### Comparative Example 2

(1) Hot water (30 kg) of 90°C was added to 2 kg of green tea leaves (grown in Kenya, large tea leaves). After batch extraction with stirring for 60 minutes, the reaction mixture was crudely filtered through a 100-mesh sieve and centrifugal operation was carried out to remove fine powder from the extract solution to yield 24.5 kg of "green tea extract" (pH 5.5) (non-polymer catechin concentration in the green tea extract solution = 0.92 mass%, a gallate percentage of the green tea extract solution = 52.4 mass%, a caffeine content: 0.16 mass%).
   The green tea extract solution thus obtained was concentrated under reduced pressure at 60°C and 2.7 kpa to a Brix concentration of 20%, followed by spray drying to obtain 0.6 kg of "green tea extract" in the powder form. The green tea extract thus obtained had a non-polymer catechin content of 33.4 mass%, a non-polymer catechin gallate percentage of 52.5 mass%, and a caffeine content of 5.8 mass%.
(2) The green tea extract (400 g) thus obtained (1) was poured in 1000 g of a 54 mass% aqueous ethanol solution under stirring conditions of room temperature and 250 r/min, followed by the addition of 70 g of acid clay ("Mizuka Ace #600", product of Mizusawa Industrial Chemicals). The resulting mixture was stirred for about one hour without changing the temperature (pH 5.2). Then, 600 g of a 92 mass% aqueous ethanol solution was added dropwise over 30 minutes. After stirring was continued for further 30 minutes, the precipitate thus formed and the acid clay were filtered out through a No. 2 filter paper. The solution thus separated was brought into contact with 60 g of active carbon ("KURARAY COAL GLC", product of KURARAY CHEMICAL), followed by filtration through a 0.2-µm membrane filter. Finally, 400 g of ion exchanged water was added, ethanol was distilled off from the resulting mixture at 40°C and 2.7 kpa, and the water content was adjusted to yield "purified green tea extract".
A non-polymer catechin content in the purified green tea extract was 22 mass%.
A non-polymer catechin content in the solid content of the purified green tea extract was 40.3 mass%.
A caffeine/non-polymer catechin mass ratio in the purified green tea extract = 0.073
A gallate percentage in the purified green tea extract = 52.6%
A (protein + dietary fiber)/non-polymer catechin mass ratio in the purified green tea extract = 0.12

Analysis results and evaluation results of the green tea extracts obtained in Example 1 are shown in Table 1, while analysis results and evaluation results of the green tea extracts obtained in Comparative Examples 1 and 2 are shown in Table 2. In the overall evaluation, appearance, color tone, and miscellaneous taste and bitterness/astringency are evaluated by the score based on the following standard.

5: Very superior
4: Superior
3: A little superior
2: A little inferior
1: Inferior
0: Very inferior

**[Table 1]**

| | Example 1 |
|---|---|
| Non-polymer catechin concentration after treatment (mass%) | 22 |
| Non-polymer catechin concentration in the solid content after treatment (mass%) | 39.9 |
| Gallate percentage in non-polymer catechins after treatment (mass%) | 30.9 |
| Caffeine/non-polymer catechins after treatment (mass ratio) | 0.087 |
| (protein+dietary fiber)/non-polymer catechins after treatment (mass ratio) | 0.09 |
| Evaluation of green tea extract after treatment | The tea extract shows considerable reduction in bitterness/astringency and miscellaneous tastes; has a relatively small caffeine content, and has a good color tone. |
| Overall evaluation | 4 |

**[Table 2]**

| | Comparative Example 1 | Comparative Example 2 |
|---|---|---|
| Non-polymer catechin concentration after treatment (mass%) | 30.8 | 22 |
| Non-polymer catechin concentration in the solid content after treatment (mass%) | 30.8 | 40.3 |
| Gallate percentage in non-polymer catechins after treatment (mass%) | 39.4 | 52.6 |
| Caffeine/non-polymer catechins after treatment (mass ratio) | 0.211 | 0.073 |
| (protein+dietary fiber)/non-polymer catechins after treatment (mass | 0.28 ratio) | 0.12 |
| Evaluation of green tea extract after treatment | The tea extract shows reduction in bitterness/astringency but is not easy to drink because miscellaneous taste derived from green tea cannot be neglected. | The tea extract shows reduction in miscellaneous taste and has a relatively small caffeine content, but is not easy to drink because strong bitterness/astringency remains. |
| Overall evaluation | 0 | 1 |

As is shown in Table 1 and Table 2, the preparation process of the present invention enables to provide a purified green tea extract having a high concentration of non-polymer catechins; having improved taste by reducing bitterness/astringency and also miscellaneous tastes due to dietary fiber derived from green tea; having a reduced protein content; and easy to drink.

### Example 2: Packaged beverage

The green tea extracts shown in Table 1 and Table 2 were each mixed with components of a packaged beverage shown in Table 3. A beverage was prepared by adding a balancing amount of ion exchanged water. The beverage was subjected to sterilization treatment based on the Food Sanitation Act of Japan and hot pack filling, whereby a packaged beverage was obtained.

A panel of five male experts was asked to take a single drink of 500 mL of each of the packaged beverages thus prepared and to evaluate miscellaneous taste and bitterness/astringency of the beverage by scores based on the following standards. The temperature of the beverage at the time of drinking was adjusted to approximately room temperature. The results are shown in Table 3.

### Evaluation of miscellaneous taste

A: The tea extract provides no miscellaneous taste.
B: The tea extract provides almost no miscellaneous taste.
C: The tea extract provides miscellaneous taste a little.
D: The tea extract provides miscellaneous taste.

### Evaluation of bitterness/astringency

A: The tea extract provides no such taste.
B: The tea extract provides almost no such taste.
C: The tea extract provides such taste a little.
D: The tea extract provides such taste.

**[Table 3]**

| | Invention product | Comparative product |
|---|---|---|
| Green tea extract C of Example 1 | 0.36 | - |
| Green tea extract of Comparative Example 2 | | 0.36 |
| Green tea extract | 22 | 22 |
| Vitamin C | 0.05 | 0.05 |
| Sodium bicarbonate | 0.005 | 0.005 |
| Cyclic oligosaccharide | 0.5 | 0.5 |
| lon exchanged water | Balance | Balance |
| Total amount | 100 | 100 |
| pH of beverage | 6.5 | 6.5 |
| Non-polymer catechins (mass%) | 0.12 | 0.12 |
| Evaluation of miscellaneous taste | B | B |
| Evaluation of bitterness/astringency | A | D |
| Evaluation results | The packaged beverage shows reduction in miscellaneous taste and bitterness/astringency , has refreshing taste, and is easy to | Although the tea extract shows reduction in miscellaneous taste, it is not easy to drink because strong because strong bitterness/astringency drink. remains. |

As is apparent from the results shown in Table 3, a packaged beverage filled with a purified green tea extract obtained by treating a green tea extract with an enzyme having a tannase activity according to the present invention shows reduction in miscellaneous taste and bitterness/astringency, has refreshing taste, and is easy to drink.

## Claims

1. A process for producing a purified green tea extract, which comprises mixing a green tea extract treated with an enzyme having a tannase activity in a mixed solution comprising an organic solvent and water at a mass ratio of from 60/40 to 90/10, and separating a precipitate thus formed.

2. The process according to Claim 1, wherein after the green tea extract is dissolved in the mixed solution of the organic solvent and the water, the organic solvent, or the water, the mass ratio of the organic solvent and the water is adjusted to from 60/40 to 90/10.

3. The process according to Claim 1 or 2, wherein the green tea extract is brought into contact with an active carbon and/or an acid clay or activated clay when the green tea extract is mixed in the mixed solution of the organic solvent and the water.

4. The process according to any one of Claims 1 to 3, wherein a gallate percentage in non-polymer catechins decreases by 5 mass% or greater when the green tea extract is treated with the enzyme having the tannase activity.

5. The process according to any one of Claims 1 to 4, wherein the gallate percentage in the non-polymer catechins after the green tea extract is treated with the enzyme having the tannase activity is adjusted to from 0 to 50 mass.

6. The process according to any one of Claims 1 to 5, wherein the organic solvent is ethanol.

7. A purified green tea extract produced by the process according to in any one of Claims 1 to 6, which comprises:
(a) non-polymer catechins having a solid content of from 10 to 60 mass%, wherein
(b) a gallate percentage in the non-polymer catechins is from 0 to 50 mass%,
(c) a caffeine/non-polymer catechin mass ratio is from 0 to 0.25, and
(d) a (protein + dietary fiber)/nonpolymer catechin mass ratio is 0.12 or less.

8. A package beverage comprising the purified green tea extract according to Claim 7.
